# EUROPEAN PATENT APPLICATION

(11) **EP 1 243 530 A1**
(43) Date of publication of application: **25.09.2002**
(21) Application number: 02006466.3
(22) Date of filing: 22.03.2002
(51) Int. Cl.: B65G 47/04

(54) **Picking device for containers**

(30) Priority: 23.03.2001 IT BO010172
(71) Applicant: T.M. di Tiziana Mazza, 40064 Ozzano Emilia (Bologna) (IT)
(72) Inventor: Barufatto, Roberto, 40068 San Lazzaro di Savena (Bologna) (IT); Barufatto, Simone, 40068 San Lazzaro di Savena (Bologna) (IT)
(74) Representative: Negrini, Elena

(57) **Abstract**

A picking device for containers (101), slidably supported by magazines (100), each one including a couple of parallel rods (103) whose first ends are connected by a fixed handle (104) and whose second ends have a removable handle (102), includes:
- a support arm (301) hinged to an end of a support frame (10) of the device;
- actuator means (306) connected to the support arm (301);
- at least a picking mean (302), slidably supported at the remaining end of the support arm (301) and having hooking means, front (304) and back (303).

The support arm (301) is rotated by the actuator means (306) from a picking condition (C) of the magazines (100) from a storage station (2), in which the picking mean (302) hooks at least a magazine (100), to an alignment condition (D) in which the ends of the related rods (103) face a feeding assembly (4) of a packaging machine positioned downstream the device (3).

The picking mean (302) is moved from the alignment condition (D) to a coupling condition (E) in which the rods (103) of the magazine (100) are associated with the feeding assembly (4).

## Description

The present invention relates to packaging machines, particularly the invention refers to a device for picking containers from a storage station.

The flexible containers, particularly of the type for pharmaceutical use, for instance strips of monodose containers or bags for parenteral solutions, usually are held by suitable supports, constituted by at least two parallel rods connected at the ends by fixed and removable handles. The rods/containers assembly constitutes a magazine, which is usually provided in antiseptic and/or sterile packaging.

The known picking devices provide the use of one or more operators which, after having removed the protection wrapping of each magazine packaging partially disassemble the magazines and then insert the containers inside the picking device. This latter usually consists of a horizontal or inclined support on which the content of one, two or three magazines can be parallely inserted, according to whether the packaging machine operates at the same time on one or two or three lines of product to be packaged.

The containers are manually transferred by the operator to the standards of the slanting feeding support of the packaging machine and by gravity they slide toward the picking point, or they are directly grasped by grasping means.

The standard of the feeding support is fixed to the machine and therefore cannot be replaced by the magazine of the containers which, thus, must be manually transferred. The magazine rods support in fact the containers in correspondence of gaps between these latter and therefore cannot be coupled to an external support, which would preclude the containers removal from said rods.

The main drawback of the known picking devices consists in the manual loading operation of the containers, which is laborious and delicate, requiring one or more skilled operators in order to remove one of the rod handles of the magazine and to transfer the content of this latter inside the picking and feeding assembly of the packaging machine.

Other drawback consists in the slowness of the feeding process which limits the machine productivity at no more than twenty-thirty containers per minute for packaging line of a

Further drawback of the known devices consists in that the containers are excessively manipulated by the operator, which is obliged to touch said containers in order to insert correctly these latter into the related feeding assembly. Such manipulation is, in fact, very critical in case of processes with pharmaceutical products in aseptic or sterile atmosphere, which require sterile containers and therefore no contacts between operator and containers.

The main object of the present invention is to propose a picking device of containers in which the manual loading operation is reduced and simplified, not requiring the use of skilled operators.

Other object is to propose a device, which avoids the manipulation of the containers by the operator, preserving in this way the integrity and the sterility of said containers.

Further object is to propose a picking device into which the magazines can be directly inserted and that therefore does not require the manual transfer of the flexible containers.

Other object is to propose a picking device, which allows moving fifty-sixty containers per minute, for each packaging line of the machine.

The above-mentioned objects are achieved according to the content of the claims.

The characteristics of the present invention are underlined in the following with particular reference to the attached drawings, in which:
- figure 1 shows a schematic front view of the device object of the present invention in a picking condition;
- figure 2 shows a side partial enlarged view of the figure 1 device, in which some elements have been removed for better underlining others;
- figure 3A shows a schematic front view of the figure 1 device in a coupling condition of the magazines to a feeding assembly;
- figures 3B and 3C show front partial enlarged views of a detail of the figure 3A device, respectively in an alignment condition and in a coupling condition;
- figures 4 and 5 show respectively a schematic plant view and a schematic side view of the storage station;
- figure 6 shows an axonometric view of a flexible container magazine, constituted by strips of monodose containers.

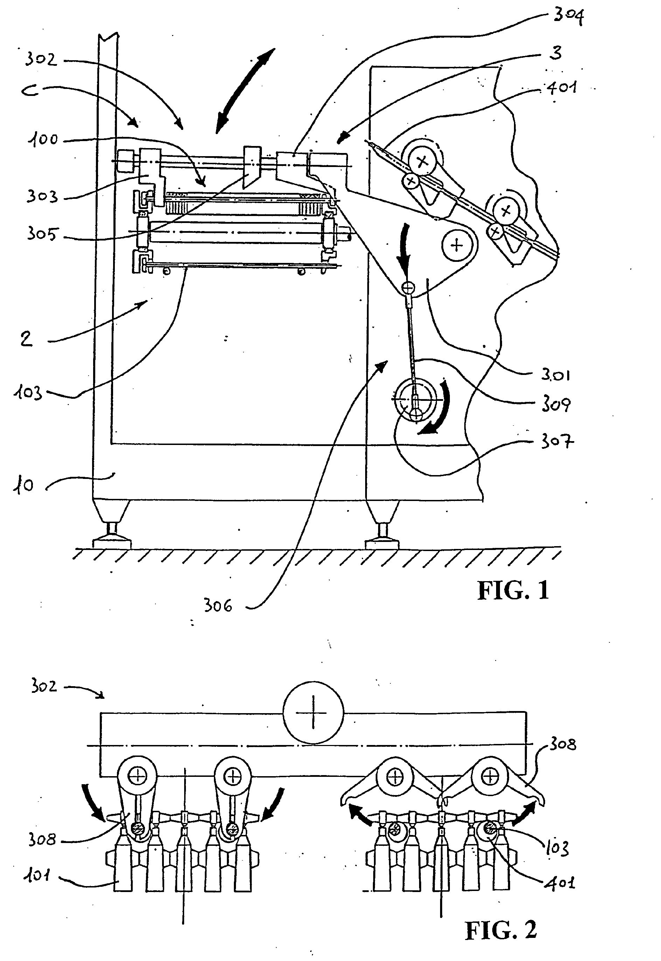

With reference to figures 1 and 2, numeral 3 indicates a picking device of magazines 100 of flexible containers 101 including a support arm 301 hinged at one end of the frame 10 of the device 3, for instance positioned upstream a packaging machine, not shown, of these containers.

The arm 301 is rotated by actuator means 306, constituted for instance by a bar 309 hinged to an eccentric 307 connected to a motorization; not shown, of said device. A picking mean 302 is slidably connected to the support arm 301 and includes hooking means, front 304 and back 303, operated by separated actuator means, not shown, and blocking means 305, interposed between said hooking means.

The picking mean 302 is driven by mechanical or pneumatic or electric actuator means and translates alternatively from an alignment condition D to a coupling condition E.

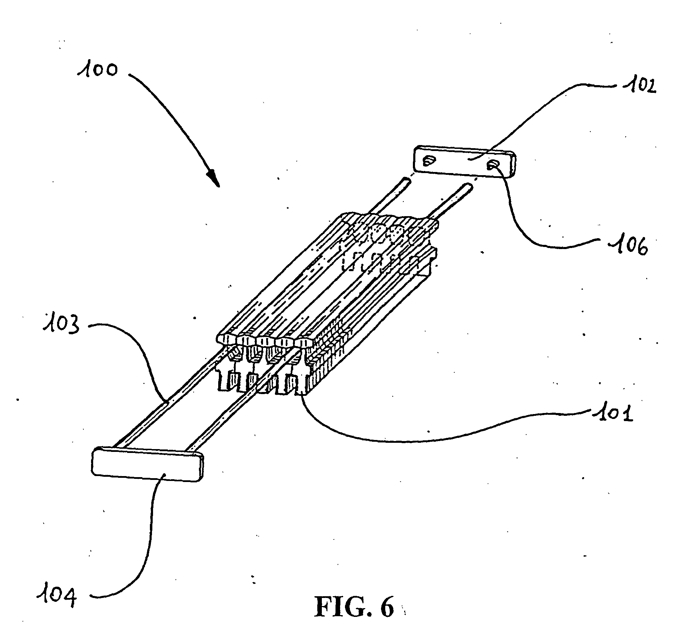

As shown in figure 6, the magazines 100 are constituted, for instance, by two rods 103, each one having a first end rigidly connected to a fixed handle 104 and the second end removably connected to a removable handle 102, provided with fixing pivots 106 that are inserted to the ends of the two rods 103.

With particular reference to figure 2, each of the hooking means, front 304 and back 303, are constituted by a two couple of grippers 308, for instance of self-centering type, for gripping the rods 103 of the magazines 100 or by two couple of grippers for gripping the fixed handle 104.

It is provided that, using the rigidity of the magazine 100, the front hooking mean 304 is constituted by mobile abutment elements, not shown, for the rods 103, for instance of double fork type.

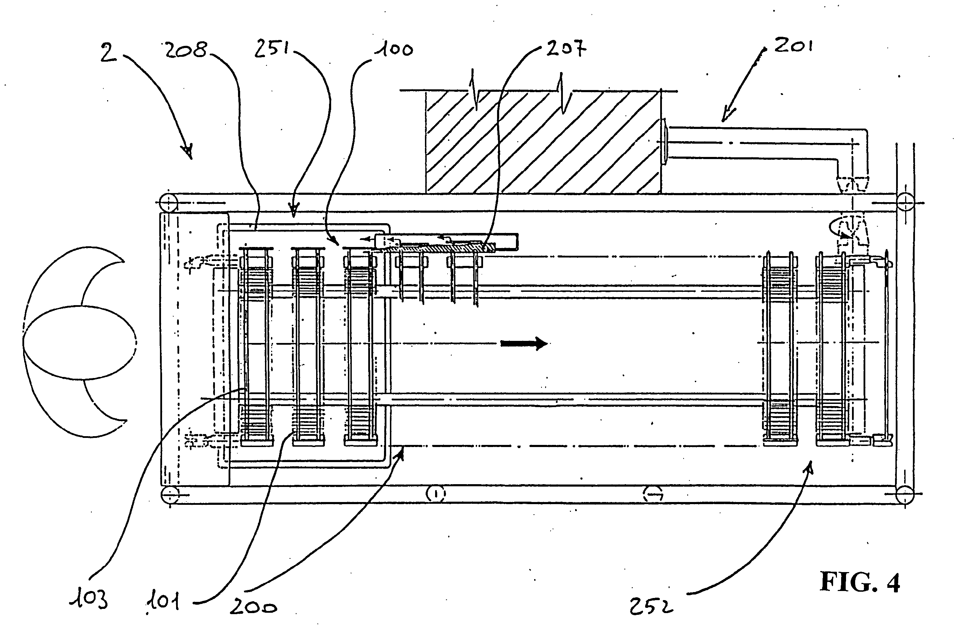

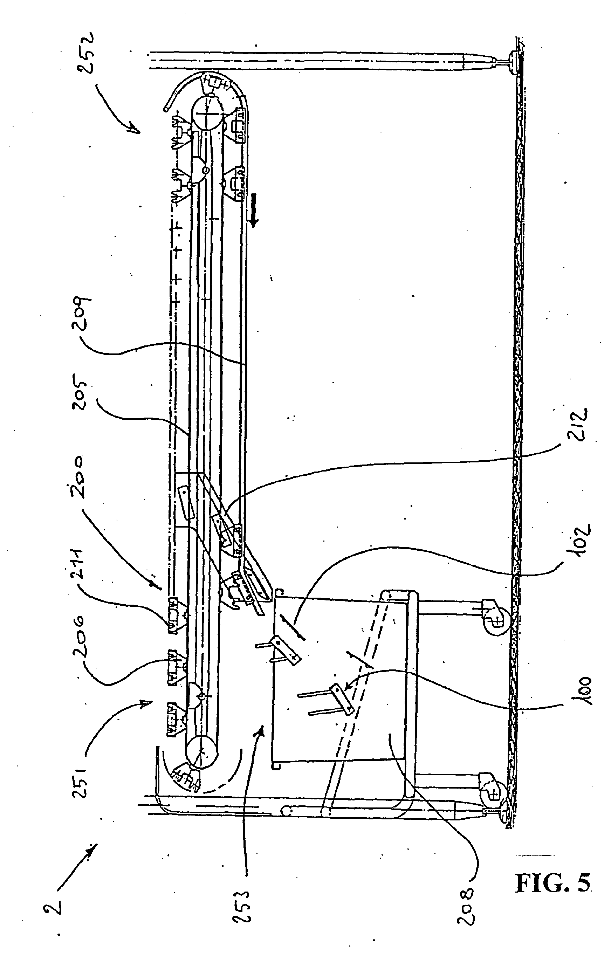

With reference to figures 4 and 5, the transfer storage station 2 of the magazines 100 is constituted by a frame support 201, connected to the frame 10 and fit for supporting conveyor belt means 200 constituted, for instance, by a two conveyor belts 205, which have a plurality of equidistant support means 206. Each support mean 206 is fork shaped and has two "V" open seats 211, in which the rods 103 of each magazine 100 are manually inserted by the operator.

The storage station 2 includes uncoupling means 207, fixed to a side of the conveyor means 200 and fit to uncouple the removable handle 102 connecting the rods 103 of the related magazine 100, guiding and supporting means 209 of the magazines, positioned under the conveyor belt means 20C and collecting means 208 of the removable handles 102 and of the empty magazines 100.

Conveyer means 212 are provided, constituted for instance by a chute, positioned sideways the conveyor belt means 200, in correspondence of the uncoupling means 207 and fit to convey the removable handles 102 in the collecting means 208. Optical or inductive or capacitive sensors, not shown in the figures, check the correct separation of the removable handle 102 from the rods 103 of the magazine 100.

The operation of the picking device 3 provides that this latter, in a picking condition C, grips a magazine 100 or, usually, a couple of magazines 100 from the storage station 2. The picking is made by means of the two couples of grippers 308 of the hooking means, front 304 and back 303, which are closed around the rods 103 or around the fixed handle 104 of the two magazines 100 in the storage station 2.

During the picking condition C, shown in figure 1, the blocking means 305, one for each magazine, are wedged into the containers separating these latter and defining, inside the magazine, two container subassemblies or packets having approximately the same number.

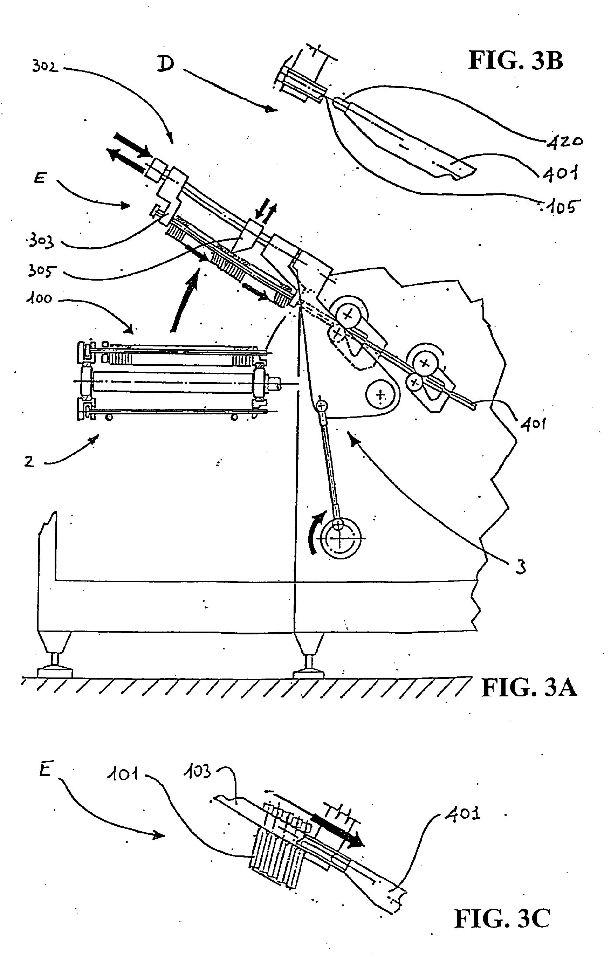

As shown in figures 3A - 3C, after gripping the magazine, the picking assembly 3 is clockwise rotated of around 30° and set in the alignment condition D, in which the couples of rods 103 of each magazine 100 are aligned with support bars 401 of a feeding assembly 4 of the packaging machine.

The picking mean 302 is translated with respect to the support arm 301 in the coupling condition E, so causing the introduction of insertion pivots 420, fixed to the upper ends of the bars 401, inside corresponding tubular seats 105, carried out in the free ends of the rods 103. At this point the magazines are integral with the feeding assembly, since they are rigidly connected. In the storage station 2 it is provided the manual insertion by an operator of a predetermined number of magazines, for instance three, on the support means 206 of the conveyor belt means 200, in correspondence of a loading area 251.

The conveyor belt means 200 move with alternate motion and transfer the magazines 100 from said loading area 251 to a gripping area 252, in which the picking device 3 grips said containers.

During the movement, suitable fixed guides compact the magazine containers, while uncoupling means 207 disengage the removable handle 102 from the related magazine 100 in a disengagement condition. The removable handles 102, once disengaged, slide by gravity through conveyer means 212 inside collecting means 208, constituted for instance by a collection vessel.

Said device 3 is fit for picking containers 100 from more packaging lines with operational frequency of at least 50/60 containers per minute. Obviously such frequency is related to the operational cycles of the packaging machine, positioned downstream said device.

The device 3 further includes electronic calculation and control means fit to check the phase coincidence between the support arm 301, the picking means 302 and the conveyor belt means 200.

The main advantage of present invention is to provide a picking device of flexible containers in which the manual loading operation is reduced and simplified, without requiring the use of skilled operators.

Other advantage is to provide a device avoiding the operators to manipulate the containers, preserving in this way the integrity and the sterility of said containers. Further advantage is to provide a picking device into which the magazines can be directly inserted without therefore requiring the manual transfer of the flexible containers. Other advantage is to provide a picking device, which allows moving fifty-sixty containers per minute, for each packaging line of the machine.

## Claims

1. Picking device of containers (101), slidably supported by magazines (100), each one including a couple of parallel rods (103) whose first ends are connected by a fixed handle (104) and whose second ends have a removable handle (102), said device being **characterized in that** includes:
- a support arm (301) hinged to an end to a support frame (10) of the device;
- actuator means (306) connected to the support arm (301);
- at least a picking mean (302), slidably supported at the remaining end of the
support arm (301) and having hooking means, front (304) and back (303); the support arm (301) being rotated by the actuator means (306) from a picking condition (C) of the magazines (100) from a storage station (2), in which the picking mean (302) hooks at least a magazine (100), to a alignment condition (D) in which the ends of the related rods (103) face a feeding assembly (4); the picking mean (302) being moved from the alignment condition (D) to a coupling condition (E) in which the rods (103) of the magazine (100) are associated to the feeding assembly (4).

2. Device according to claim 1 **characterized in that** the picking mean (302) includes blocking means (305) interposed between the hooking means, front (304) and back (303), and fit to divide the container assembly (101) in at least two subassemblies.

3. Device according to claim 1 **characterized in that** the picking mean (302) is driven by mechanical or pneumatic or electric actuator means in such a way to be alternatively moved between the alignment condition (D) and the coupling condition (E).

4. Device according to claim 1 **characterized in that** each hooking means, front (304) and back (303), is constituted by at least a gripper (308) for gripping at least a rod (103) or by at least a grippers shaped for grabbing the fixed handle (104).

5. Device according to claim 4 **characterized in that** said gripper (308) is self-centering.

6. Device according to claim 1 **characterized in that** the back hooking mean (303) includes at least a gripper (308) for gripping at least a rod (103) or the fixed handle (104) and the front hooking mean (304) includes mobile abutment elements for at

7. Device according to claim 1 **characterized in that** the storage station (2) includes:
- a support frame (201) connected to the frame (10) fit to support conveyor belt means (200) to which support means (206) of the rods (103) are connected;
- uncoupling means (207) sideways fixed to the conveyor belt means (200);
- guiding and supporting means (209) of the magazines (100) positioned under the conveyor belt means (200);
- collecting means (208) of the magazines (100);
said conveyor belt means (200) being fit to translate the magazines (100) from a loading area (251) of these latter in the storage station (2) to an unloading area (253) of the magazines (100) in said collecting means (208), through a disengagement condition of removable handles (102) which are removed by the uncoupling means (207) and conveyed in the collecting means (208).

8. Device according to claim 7 **characterized in that** the support means (206) are fork shaped and have two open "V" seats (211) in which the rods (103) of the magazines (100) are inserted.

9. Device according to claim 7 **characterized in that** the storage station (2) includes optical or inductive or capacitive sensors fit to check the correct separation of the removable handle (102) of the magazine (100) in the disengagement condition.

10. Device according to claim 7 **characterized in that** the storage station (2) includes conveyer means (212) positioned at the side of the conveyor belt means (200) and fit to convey the removable handles (102) into said collecting means (208).

11. Device according to claim 1 **characterized in that** the actuator means (306) includes a rod (309) having an end hinged to an eccentric (307) and the remaining end hinged to the support arm (301).

12. Device according to any of the preceding claims **characterized in that** is completely controlled by electronic calculation and control means fit to control the phase coincidence between the support arm (301), the picking means (302) and the storage station (2).
